# EUROPÄISCHE PATENTANMELDUNG

(11) **EP 3 211 206 A1**
(43) Veröffentlichungstag der Anmeldung: **30.08.2017**
(21) Anmeldenummer: 17165219.1
(22) Anmeldetag: 17.07.2014
(51) Int. Cl.: F02M 37/22, B01D 36/00

(54) **FLÜSSIGKEITSFILTER, INSBESONDERE KRAFTSTOFFFILTER**

(30) Priorität: 15.08.2013 DE 102013013487
(62) Teilanmeldung aus: 14744798.1
(71) Anmelder: Mann+Hummel GmbH, 71638 Ludwigsburg (DE)
(72) Erfinder: FRIEDERICH, Thomas, 71739 Oberriexingen (DE); WEIDINGER, Sven, 71384 Weinstadt (DE); BEYERLIN, Holger, 71292 Friolzheim (DE); GOEDECKE, Marco, 71665 Vaihingen (DE)
(74) Vertreter: Seyboth, Matthias

(57) **Zusammenfassung**

Ein Flüssigkeitsfilter weist ein Ablassventil zum Ablassen von Flüssigkeit aus einem Flüssigkeitssammelraum auf, wobei ein Ventilkörper des Ablassventils zwischen einer Schließ- und einer Öffnungsposition verstellbar ist und sowohl einen Ableitungskanal für die Flüssigkeit als auch einen Belüftungskanal öffnet bzw. schließt. Ableitungs- und Belüftungskanal sind als getrennte Kanäle ausgebildet, wobei während der Öffnungsbewegung des Ventilkörpers zunächst der Ableitungskanal und anschließend der Belüftungskanal geöffnet wird.

## Beschreibung

### Technisches Gebiet

Die Erfindung bezieht sich auf einen Flüssigkeitsfilter, insbesondere einen Kraftstoff- oder Ölfilter, nach dem Oberbegriff des Anspruches 1.

### Stand der Technik

In der DE 10 2010 046 528 A1 wird ein Kraftstofffilter beschrieben, der in einem Gehäuse ein ringförmiges Filterelement aufweist, welcher von dem Kraftstoff radial von außen nach innen durchströmt wird. Am Filterelement können Wassertropfen abgeschieden werden, die nach unten abströmen und in einem Wassersammelraum innerhalb des Filtergehäuses aufgefangen werden. In das Filtergehäuse ist ein Ablassventil integriert, über das das gesammelte Wasser aus dem Filtergehäuse abgelassen werden kann. Das Ablassventil weist ein in den Boden des Gehäuses einschraubbares Ventilgehäuse auf sowie einen im Ventilgehäuse über eine weitere Schraubverbindung aufgenommenen Ventilkörper, welcher einen Ableitungskanal öffnet bzw. schließt. Der Ableitungskanal verläuft innerhalb des Ventilgehäuses und weist einen Abschnitt in dem rohrförmig ausgebildeten Ventilkörper auf, über den im geöffneten Zustand das Wasser abströmen kann.

Für einen Druckausgleich ist ein Belüftungskanal im Ventilgehäuse vorgesehen, der mit dem Abschnitt des Wasserableitungskanals stromauf des Ventilkörpers kommuniziert. Sobald der Ventilkörper aufgeschraubt wird, werden der Ableitungskanal und der Belüftungskanal gleichzeitig geöffnet.

### Offenbarung der Erfindung

Der Erfindung liegt die Aufgabe zugrunde, abgeschiedenes Fluid aus einem Flüssigkeitsfilter mit konstruktiv einfachen Maßnahmen sicher abzuleiten.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Flüssigkeitsfilter handelt es sich vorzugsweise um einen Kraftstofffilter, der bevorzugt für Brennkraftmaschinen eingesetzt wird. In Betracht kommt aber auch eine Filtration sonstiger Flüssigkeiten, beispielsweise eine Verwendung als Ölfilter oder als Harnstofffilter. Bei der Filtration der zu reinigenden Flüssigkeit wird Wasser abgeschieden, welches sich innerhalb des Filtergehäuses in einem Flüssigkeitssammelraum ansammelt und über ein Ablassventil regelmäßig abgelassen werden kann. Das Ablassventil öffnet bzw. verschließt einen Ableitungskanal, der mit dem Flüssigkeitssammelraum verbunden ist und über den das dort gesammelte Wasser aus dem Filtergehäuse abgeleitet werden kann.

Der Ventilkörper ist in einem Ventilgehäuse aufgenommen, welches sich im oder am Filtergehäuse bzw. einem mit dem Filtergehäuse verbundenen Bauteil befindet. Der Ventilkörper ist im Ventilgehäuse zwischen einer Schließposition und einer Öffnungsposition zu verstellen, wobei in der Öffnungsposition der Ableitungskanal offen ist, so dass Wasser aus dem Wassersammelraum abgeleitet werden kann, wohingegen in der Schließposition der Ableitungskanal verschlossen ist.

Zusätzlich zu dem Ableitungskanal weist der Flüssigkeitsfilter einen Belüftungskanal auf, über den während des Ableitens des Wassers zum Druckausgleich Luft in den Flüssigkeitssammelraum einströmen kann. Auch der Belüftungskanal wird von dem Ventilkörper des Ablassventils geöffnet bzw. geschlossen. Der Ableitungskanal und der Belüftungskanal sind als getrennte Kanäle ausgeführt und werden bei der Öffnungsbewegung des Ventilkörpers zeitlich versetzt geöffnet. Zunächst wird der Ableitungskanal, anschließend der Belüftungskanal bei der Stellbewegung des Ventilkörpers geöffnet. Durch die zeitlich versetzte Öffnung von Ableitungs- und Belüftungskanal wird vermieden, dass Fluid aus dem Flüssigkeitssammelraum versehentlich über den Belüftungskanal nach außen strömt. Stattdessen kann über den zuerst geöffneten Ableitungskanal Fluid aus dem Flüssigkeitssammelraum beginnen abzuströmen, erst danach wird der Belüftungskanal geöffnet, wobei mit dem Beginn der Abströmung ein Druckabfall im Flüssigkeitssammelraum einsetzt, welcher vermeidet, dass mit der nachfolgenden Öffnung des Belüftungskanals Fluid aus dem Flüssigkeitssammelraum über den Belüftungskanal versehentlich nach außen strömt. Der Unterdruck im Flüssigkeitssammelraum sorgt vielmehr dafür, dass Luft von außen über den Belüftungskanal in den Flüssigkeitssammelraum gelangt, so dass ein Druckausgleich stattfinden kann und die weitere Abströmung über den geöffneten Ableitungskanal ungehindert erfolgen kann.

Der Ableitungskanal verläuft vorteilhafterweise außerhalb des Ventilkörpers. Dies hat den Vorteil, dass der Ventilkörper nicht Teil des Ableitungskanals ist bzw. der Ableitungskanal nicht durch den Ventilkörper verläuft, so dass dem Ventilkörper lediglich die Funktion zukommt, den Ableitungs- und Belüftungskanal zu öffnen bzw. zu schließen. Vorteilhaft ist darüber hinaus, dass die Art der Verstellbewegung des Ventilkörpers ohne Einfluss auf den Ableitungskanal ist. Die Stellbewegung des Ventilkörpers ist vorzugsweise eine lineare, axiale Stellbewegung, welche durch Einschrauben des Ventilkörpers im aufnehmenden Ventilgehäuse erreicht wird. Die bei der Schraubbewegung entstehende Rotation um die Ventilkörperlängsachse verstellt den Ventilkörper axial und bewirkt das Öffnen und Schließen des Ableitungskanals, der jedoch ortsfest am Gehäuse angeordnet sein kann. Bei Ausführungen aus dem Stand der Technik, bei denen der Ableitungskanal durch das Innere des Ventilkörpers verläuft, dreht sich dagegen ein an den Ventilkörper angeschlossener Schlauch für die Ableitung des Fluids aus dem Flüssigkeitssammelraum. Eine derartige Drehung des Ableitungskanals ist bei der erfindungsgemäßen Ausführung dagegen nicht erforderlich.

Gemäß einer weiteren zweckmäßigen Ausführung ragt der Belüftungskanal in den Flüssigkeitssammelraum ein, wobei die Einströmöffnung des Belüftungskanals im Flüssigkeitssammelraum höher liegt als die Einströmöffnung des Ableitungskanals im Flüssigkeitssammelraum. Diese Höhendifferenz in den Einströmöffnungen von Belüftungs- und Ableitungskanal sorgt für eine zusätzliche Sicherheit gegen ein versehentliches Abströmen von Flüssigkeit über den Belüftungskanal nach außen. Liegt der Wasserspiegel im Flüssigkeitssammelraum unterhalb der Einströmöffnung des Belüftungskanals, ist ein Abströmen von Wasser über den Belüftungskanal ausgeschlossen, sofern der Flüssigkeitsfilter in ordnungsgemäßer Position und auf ebenem Untergrund steht. Bei einem Einsatz in Fahrzeugen liegt die höherliegende Einströmöffnung des Belüftungskanals auch bei den üblichen Steigungen bzw. Gefällstrecken in der Regel oberhalb des Wasserspiegels im Flüssigkeitssammelraum.

Gemäß einer weiteren vorteilhaften Ausführung verlaufen der Ableitungskanal und der Belüftungskanal jeweils zumindest abschnittsweise in Radialrichtung, bezogen auf die Längsachse des Ventilkörpers. Vorteilhafterweise befinden sich Ableitungskanal und Belüftungskanal auf diametral gegenüberliegenden Seiten des Ventilkörpers und sind axial versetzt zueinander angeordnet. Mit der axialen Öffnungsbewegung des Ventilkörpers werden nacheinander der Ableitungs- und der Belüftungskanal geöffnet. Die radial verlaufenden Abschnitte sind hierbei als Stutzen ausgeführt, welche vorzugsweise einteilig mit dem Ventilgehäuse ausgebildet sind.

Der radiale Stutzen des Belüftungskanals, welcher in den Flüssigkeitssammelraum einragt, kommuniziert mit einem weiteren Abschnitt des Belüftungskanals zwischen der Innenwand des Ventilgehäuses und der Außenseite des Ventilkörpers. In das Ventilgehäuse ist des Weiteren eine Einströmöffnung des Ableitungskanals eingebracht, über die dieser mit dem Flüssigkeitssammelraum kommuniziert. Der radiale Stutzen des Ableitungskanals erstreckt sich nach außen, auf den Stutzen kann ggf. ein Schlauch aufgesteckt werden.

Gemäß einer weiteren zweckmäßigen Ausführung befindet sich das Ablassventil in einem Gehäusedeckel, welcher mit dem Gehäuse des Flüssigkeitsfilters zu verbinden ist, beispielsweise an der Unterseite auf das Gehäuse aufschraubbar ist. Das Ventilgehäuse, in welchem der Ventilkörper aufgenommen ist, wird hierbei entweder mit dem Gehäusedeckel verbunden, beispielsweise ebenfalls durch Schrauben, oder ist einteilig mit dem Gehäusedeckel ausgebildet.

Gemäß einer weiteren zweckmäßigen Ausführung ist vorgesehen, dass der Ventilkörper radial zur Gehäuselängsachse des Flüssigkeitsfilters angeordnet ist. Hierdurch kann eine in Achsrichtung des Filters klein bauende Ausführung erreicht werden, außerdem ist die Integration des Ablassventils in den Gehäusedeckel des Flüssigkeitsfilters möglich.

Gemäß einer weiteren vorteilhaften Ausführung, die sich auf einschraubbare Ventilkörper bezieht, befindet sich ein Außengewinde des Ventilkörpers in der Dichtposition zwischen den axial versetzt angeordneten Strömungsöffnungen des Ableitungskanals und des Belüftungskanals. Das Außengewinde des Belüftungskanals greift in ein zugeordnetes Innengewinde am Ventilgehäuse ein, wobei die Gewindeverbindung in der geöffneten Position einen unerwünschten axialen Übertritt von dem Ableitungskanal zum Belüftungskanal verhindert. Zusätzlich kann an der Außenseite des Ventilkörpers ein Dichtanschlag angeordnet sein, der in der Schließposition des Ventilkörpers an einem zugeordneten Gegenanschlag an der Innenseite des aufnehmenden Ventilgehäuses anliegt und ebenfalls den Ableitungskanal vom Belüftungskanal strömungsdicht separiert.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch einen Kraftstofffilter für eine Brennkraftmaschine, mit einem in einen unteren Gehäusedeckel integrierten Ablassventil,
- Fig. 2: in vergrößerter Darstellung das Ablassventil in der Schließposition,
- Fig. 3: das Ablassventil in Öffnungsposition,
- Fig. 4: der Ventilkörper des Ablassventils in perspektivischer Darstellung,
- Fig. 5: in perspektivischer Darstellung der Gehäusedeckel mit dem Ablassventil.

In den Figuren sind gleiche Bauteile mit gleichen Bezugszeichen versehen.

### Ausführungsformen der Erfindung

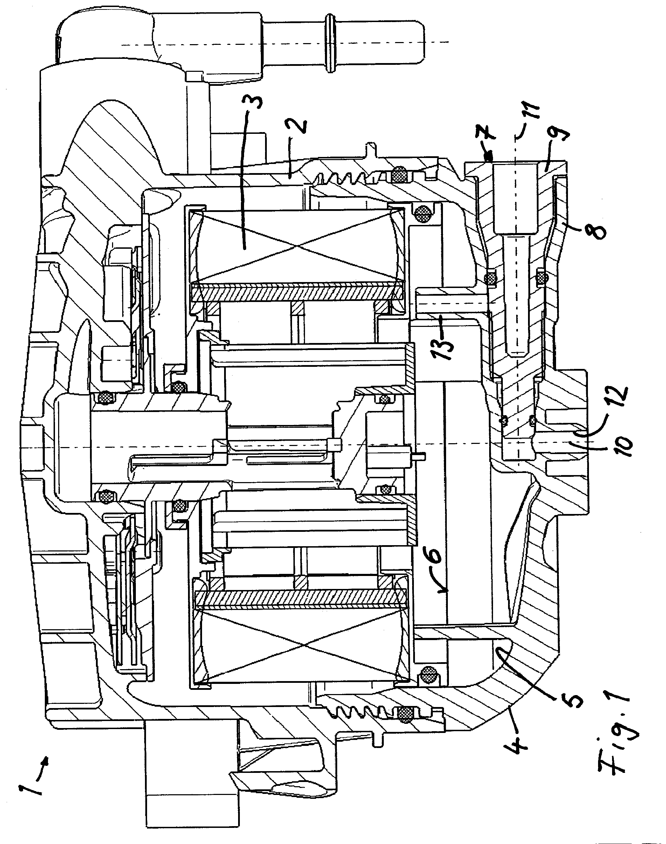

In Fig. 1 ist ein Kraftstofffilter 1 für eine Brennkraftmaschine in einem Fahrzeug dargestellt. Der Kraftstofffilter 1 weist in einem Filtergehäuse 2 ein ringförmiges Filterelement 3 auf, das radial von außen nach innen von dem zu reinigenden Fluid durchströmt wird. Am Filterelement 3 können Wassertröpfchen abgeschieden werden, welche nach unten abströmen und in einem Flüssigkeitssammelraum 5 gesammelt werden, der im Gehäusedeckel 4 gebildet ist. Der Wasserspiegel des im Flüssigkeitssammelraum aufgenommenen Wassers ist mit Bezugszeichen 6 bezeichnet.

In den Gehäusedeckel 4, der separat von dem Filtergehäuse 2 ausgebildet und über eine Schraubverbindung mit dem Filtergehäuse 2 an dessen Unterseite zu verbinden ist, ist ein Ablassventil 7 integriert. Das Ablassventil 7 weist ein Ventilgehäuse 8 und einen im Ventilgehäuse aufgenommenen Ventilkörper 9 auf, wobei das Ventilgehäuse einteilig mit dem Gehäusedeckel 4 ausgebildet ist. Die Längsachse 11 des Ablassventils 7 verläuft radial zur Längsachse 10 des Kraftstofffilters. Der Ventilkörper 9 ist über eine Schraubverbindung mit dem Ventilgehäuse 8 verbunden; an der Außenseite befindet sich am Ventilkörper 9 ein Außengewinde, das in ein korrespondierendes Innengewinde an der Innenwand des Ventilgehäuses 8 eingreift.

Bei einer Stellbewegung des Ventilkörpers 9, welche durch ein Drehen des Ventilkörpers erzeugt wird, verstellt sich der Ventilkörper 9 in Richtung seiner Längsachse 11 und öffnet bzw. schließt hierbei einen Ableitungskanal 12, über den das Wasser 6 im Flüssigkeitssammelraum 5 abgeleitet werden kann. Außerdem kann über die Stellbewegung des Ventilkörpers 9 ein Belüftungskanal 13 geöffnet bzw. geschlossen werden, über den im geöffneten Zustand Luft von außen in den Flüssigkeitssammelraum 5 zum Druckausgleich während des Abströmens des Wassers geleitet werden kann.

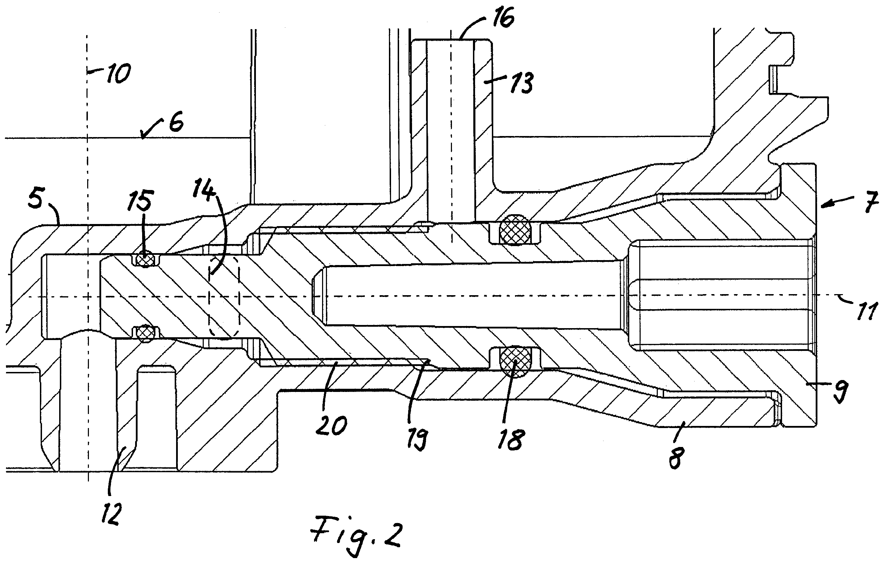

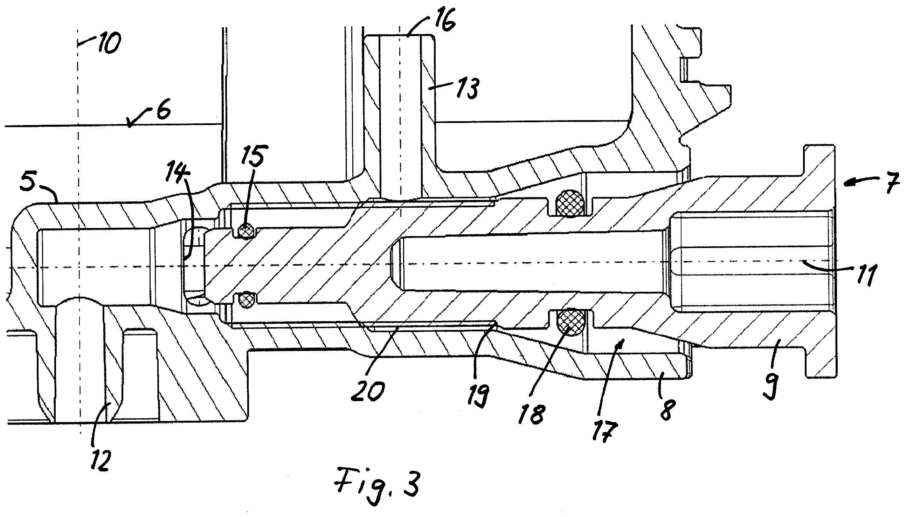

In Fig. 1 und 2 ist der Ventilkörper 9 des Ablassventils 7 in seiner Schließposition dargestellt, in der sowohl der Ableitungskanal 12 als auch der Belüftungskanal 13 verschlossen sind. In Fig. 3 ist dagegen der Ventilkörper 9 in der Öffnungsposition dargestellt, in der beide Kanäle 12, 13 offen sind.

Der Ableitungskanal 12 weist einen radial zur Längsachse 11 des Ablassventils 7 gerichteten, nach unten weisenden Stutzen auf, der über eine Einströmöffnung 14 in der Wandung des Ventilgehäuses 8 mit dem Flüssigkeitssammelraum 5 kommuniziert. In der Schließposition ist der Strömungsweg zwischen der Einströmöffnung 14 und dem nach unten ragenden Stutzen des Ableitungskanals 12 unterbrochen. Benachbart zur freien Stirnseite befindet sich am Umfang des Ventilkörpers 9 ein erster Dichtring 15, der den Strömungsweg zwischen der Einströmöffnung 14 und dem Stutzen des Ableitungskanals 12 strömungsdicht separiert. In der Öffnungsstellung gemäß Fig. 3 ist dagegen der Ventilkörper 9 axial zurückverstellt, so dass der Strömungsweg zwischen der Einströmöffnung 14 und dem nach unten ragenden Stutzen des Ableitungskanals offen ist und Flüssigkeit 6 aus dem Flüssigkeitssammelraum 5 abströmen kann. Der Strömungsweg ist offen, sobald der Dichtring 15 axial in einen sich trichterförmig erweiternden Abschnitt an der Innenwand des aufnehmenden Ventilgehäuses 8 gelangt, in welchem sich auch die Einströmöffnung 14 des Ableitungskanals 12 befindet.

Der Belüftungskanal 13 weist ebenfalls einen Stutzen auf, der im Ausführungsbeispiel gegenüber dem Stutzen des Ableitungskanals 12 zum einen axial versetzt angeordnet und zum anderen diametral gegenüberliegend angeordnet ist. Die nach oben ragende Stirnseite des Stutzens des Belüftungskanals 13 bildet eine Einströmöffnung 16, die höher liegt als die Einströmöffnung 14 des Ableitungskanals 12. Der Stutzen des Belüftungskanals 13 ragt somit zwar ebenfalls in den Flüssigkeitssammelraum 5 ein, aufgrund der höheren Lage der Einströmöffnung 16 gegenüber der Einströmöffnung 14 ist jedoch ein versehentliches Eindringen von Flüssigkeit in den Stutzen des Belüftungskanals 13 erschwert. Im Ausführungsbeispiel liegt der Wasserspiegel im Flüssigkeitssammelraum 5 oberhalb der Einströmöffnung 14, jedoch unterhalb der Einströmöffnung 16.

Bei geöffnetem Ventilkörper 9 ist auch der Strömungsweg durch den Belüftungskanal 13 freigegeben. Der radial in den Flüssigkeitssammelraum 5 einragende Stutzen des Belüftungskanals 13 kommuniziert im geöffneten Zustand mit einem Strömungsweg 17 (Fig. 3) zwischen der äußeren Mantelfläche des Ventilkörpers 9 und der Innenwand des Ventilgehäuses 8. Im Bereich des Strömungswegs 17 weist das Ventilgehäuse 8 eine trichterförmige Erweiterung 8 auf. An der Außenseite des Ventilkörpers 9 befindet sich ein zweiter Dichtring 18, der dem Belüftungskanal 13 zugeordnet ist und diesen in der Schließposition strömungsdicht verschließt. In geöffneter Position liegt dagegen der zweite Dichtring 18 im Bereich der trichterförmigen Erweiterung des Ventilgehäuses 8 und gibt somit den Strömungsweg im Belüftungskanal 13 frei, so dass Luft von außen parallel zur Längsachse 11 des Ventilkörpers 9 über den Strömungsweg 17 einströmen kann und weiter radial über den Stutzen des Belüftungskanals 13 in den Flüssigkeitssammelraum 5 gelangt.

Der axiale Stellweg, welcher von dem zweiten Dichtring 18 zum Öffnen des Belüftungskanals 13 zurückgelegt werden muss, ist größer als der axiale Stellweg des ersten Dichtrings 15 zum Öffnen des Ableitungskanals 12. Erreicht wird dies dadurch, dass der zweite Dichtring 18 bei der Öffnungsbewegung später in die zugeordnete trichterförmige Erweiterung im Ventilgehäuse 8 gelangt als der Dichtring 15 in die ihm zugeordnete trichterförmige Erweiterung. Auf diese Weise wird sichergestellt, dass mit dem Öffnen des Ventilkörpers 9 zunächst der Ableitungskanal 12 geöffnet wird und erst danach der Belüftungskanal 13. Hierdurch ist sichergestellt, dass zu Beginn des Abströmens der Flüssigkeit 6 im Flüssigkeitssammelraum 5 der Belüftungskanal 13 noch geschlossen ist, wodurch ein geringfügiger Unterdruck im Flüssigkeitssammelraum 5 erzeugt wird, der für ein Einströmen von Luft über den Belüftungskanal 13 in den Flüssigkeitssammelraum 5 sorgt, sobald der Belüftungskanal 13 vom Ventilkörper 9 freigegeben wird.

An der Mantelfläche des Ventilkörpers 9 befindet sich ein Dichtanschlag 19 in Form einer umlaufenden, radial erweiterten Ringschulter, wobei der Dichtanschlag 19 bei geschlossenem Ventilkörper 9 an einem zugeordneten Gegenanschlag im Bereich des radial in den Flüssigkeitssammelraum 5 einragenden Stutzens des Belüftungskanals 13 anliegt. Hierdurch ist sichergestellt, dass keine Fehlströme von Wasser zwischen dem Ableitungskanal 12 und dem Belüftungskanal 13 entstehen können. Strömungshindernd wirkt außerdem das Gewinde 20, vorzugsweise ein Feingewinde, mit dem der Ventilkörper 9 im Ventilgehäuse verschraubt ist und das sich im Schließzustand des Ventilkörpers sowie teilweise auch im geöffneten Zustand axial zwischen dem Ableitungskanal 12 und dem Belüftungskanal 13 befindet.

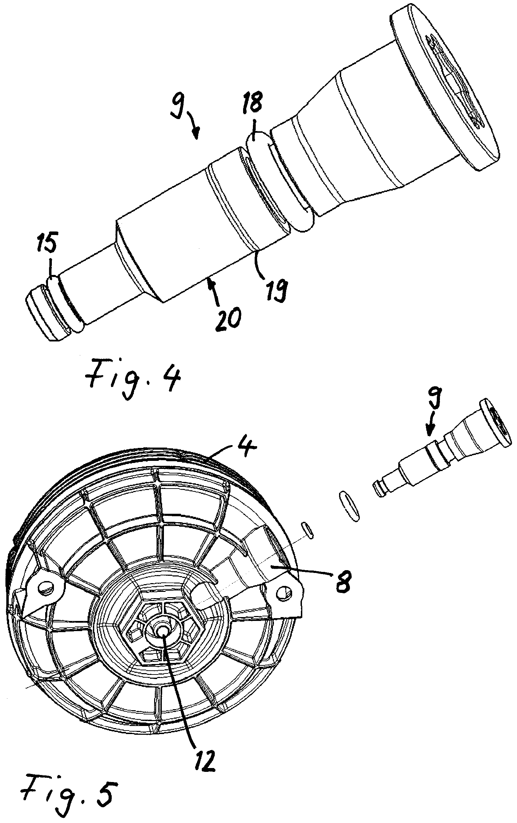

In Fig. 4 ist der Ventilkörper 9 in Einzeldarstellung gezeigt. Zu erkennen sind verschiedene Abschnitte mit unterschiedlich großem Durchmesser, die über konische Übergangsabschnitte miteinander verbunden sind. Der im montierten Zustand am weitesten in das Ventilgehäuse 8 einragende Teil des Ventilkörpers 9 weist den kleinsten Durchmesser auf.

Der perspektivischen Ansicht gemäß Fig. 5 ist zu entnehmen, dass sich das einteilig mit dem Gehäusedeckel 4 ausgebildete Ventilgehäuse 8 an der Unterseite des Gehäusedeckels befindet und radial zur Längsachse des Gehäusedeckels gerichtet ist. Hierdurch wird insgesamt eine bezogen auf die Achsrichtung des Kraftstofffilters bzw. Gehäusedeckels klein bauende Ausführung erreicht.

## Patentansprüche

1. Flüssigkeitsfilter, insbesondere Kraftstoff- oder Ölfilter, mit einem Flüssigkeitssammelraum (5) und mit einem Ablassventil (7) zum Ablassen von Flüssigkeit aus dem Flüssigkeitssammelraum (5), wobei das Ablassventil (7) in einem Ventilgehäuse (8) einen verstellbaren Ventilkörper (9) aufweist, der zwischen einer den Flüssigkeitssammelraum (5) verschließenden Schließposition und einer Öffnungsposition verstellbar ist, in der der Flüssigkeitssammelraum (5) mit einem Ableitungskanal (12) kommuniziert, mit einem Belüftungskanal (13), über den beim Ablassen der Flüssigkeit Luft einströmt und der ebenfalls vom Ventilkörper (9) zu öffnen bzw. verschließen ist, **dadurch gekennzeichnet, dass** der Ableitungskanal (12) und der Belüftungskanal (13) als getrennte Kanäle ausgebildet sind, wobei bei der Öffnungsbewegung des Ventilkörpers (9) zunächst der Ableitungskanal (12) und anschließend der Belüftungskanal (13) geöffnet wird.

2. Flüssigkeitsfilter nach Anspruch 1, **dadurch gekennzeichnet, dass** der Ableitungskanal (12) außerhalb des Ventilkörpers (9) verläuft.

3. Flüssigkeitsfilter nach Anspruch 1 oder 2, **dadurch gekennzeichnet, dass** der Belüftungskanal (13) in den Flüssigkeitssammelraum (5) einragt und die Einströmöffnung (16) des Belüftungskanals (13) im Flüssigkeitssammelraum (5) höher liegt als die Einströmöffnung (14) des Ableitungskanals (12) im Flüssigkeitssammelraum (5).

4. Flüssigkeitsfilter nach einem der Ansprüche 1 bis 3, **dadurch gekennzeichnet, dass** der Ableitungskanal (12) und der Belüftungskanal (13) jeweils zumindest abschnittsweise radial zur Längsachse (11) des Ventilkörpers (9) verlaufen.

5. Flüssigkeitsfilter nach Anspruch 4, **dadurch gekennzeichnet, dass** der Ableitungskanal (12) und der Belüftungskanal (13) auf diametral gegenüberliegenden Seiten des Ventilkörpers (9) angeordnet sind.

6. Flüssigkeitsfilter nach einem der Ansprüche 1 bis 5, **dadurch gekennzeichnet, dass** die Längsachse (11) des Ventilkörpers (9) radial zur Längsachse eines Gehäuses (2) des Flüssigkeitsfilters (1) verläuft.

7. Flüssigkeitsfilter nach einem der Ansprüche 1 bis 6, **dadurch gekennzeichnet, dass** das Ablassventil (7) in einen mit dem Gehäuse (2) des Flüssigkeitsfilters (1) zu verbindenden Gehäusedeckel (4) auf der Unterseite des Flüssigkeitsfilters (1) eingebracht ist.

8. Flüssigkeitsfilter nach einem der Ansprüche 1 bis 7, **dadurch gekennzeichnet, dass** der Ableitungskanal (12) und der Belüftungskanal (13) bezogen auf die Längsachse (11) des Ventilkörpers (9) axial versetzt zueinander angeordnet sind.

9. Flüssigkeitsfilter nach einem der Ansprüche 1 bis 8, **dadurch gekennzeichnet, dass** der Ventilkörper (9) in das Ventilgehäuse (8) einschraubbar ist.

10. Flüssigkeitsfilter nach Anspruch 9, **dadurch gekennzeichnet, dass** zwischen den Strömungsöffnungen (14, 16) des Ableitungskanals (12) und des Belüftungskanals (13) im Ventilgehäuse (8) ein Außengewinde (20) des Ventilkörpers (9) liegt.
